# EUROPÄISCHE PATENTSCHRIFT

(11) **EP 1 855 928 B1**
(45) Veröffentlichungstag und Bekanntmachung des Hinweises auf die Patenterteilung: **11.04.2012**
(21) Anmeldenummer: 06707318.9
(22) Anmeldetag: 28.02.2006
(51) Int. Cl.: B60T 17/22, B60T 8/32

(54) **STEUEREINRICHTUNG EINES SCHIENENFAHRZEUGS**
CONTROL UNIT FOR A RAIL VEHICLE
DISPOSITIF DE COMMANDE D'UN VEHICULE SUR RAILS

(30) Priorität: 02.03.2005 DE 102005010118
(43) Veröffentlichungstag der Anmeldung: 21.11.2007
(60) Teilanmeldung: 09000488.8
(73) Patentinhaber: KNORR-BREMSE Systeme für Schienenfahrzeuge GmbH, 80809 München (DE)
(72) Erfinder: AURICH, Stefan, 86316 Friedberg (DE); SCHUHMACHER, Johannes, 81373 München (DE); WACH, Jörg-Johannes, 81247 München (DE); FRIESEN, Ulf, 85579 Neubiberg (DE)
(74) Vertreter: Mattusch, Gundula
(86) Internationale Anmeldenummer: PCT/EP2006/001810
(87) Internationale Veröffentlichungsnummer: WO 2006/092263

(56) Entgegenhaltungen:
- EP-A- 0 794 102
- DE-A1- 10 332 034
- DE-U1- 20 220 772

## Beschreibung

### Stand der Technik

Die Erfindung geht aus von einer Steuereinrichtung eines Schienenfahrzeugs, die eine erste Einrichtung aufweist, wobei die erste Einrichtung
- eine Bremssteuereinrichtung ist, und ein elektronisches Bremssteuergerät zur Ausgabe von Steuerbefehlen an Bremsaktuatoren umfasst, und/oder
- eine Gleitschutzeinrichtung ist, welche in Abhängigkeit wenigstens eines von einem Gleitschutzsensor an ein elektronisches Gleitschutzsteuergerät gelieferten Drehgeschwindigkeitssignals den Radschlupf der Räder wenigstens einer Achse regelt, und/oder
- eine Rollüberwachungseinrichtung ist, und ein elektronisches Rollüberwachungssteuergerät und wenigstens einen Rollüberwachungssensor zum Erfassen der Drehgeschwindigkeit wenigstens einiger Räder in Form eines Drehgeschwindigkeitssignals umfasst,
wobei die Steuereinrichtung eine zweite Einrichtung aufweist, die eine Fahrwerksüberwachungseinrichtung zur Überwachung und/oder zur Diagnose des Fahrwerks im Hinblick auf kritische Zustände und Schäden, Entgleisung, heißgelaufene Lager, instabiler Lauf und ähnliches ist, und ein elektronisches Fahrwerksüberwachungssteuergerät umfasst, gemäß dem Oberbegriff von Patentanspruch 1.

Eine solche Steuereinrichtung ist aus der DE 103 32 034 A1 bekannt. Gleitschutzeinrichtungen sind nach UIC-Blatt 541-05 für alle Schienenfahrzeuge mit Hochleistungsbremsen der Gattung R vorgeschrieben, wobei jedes Drehgestell getrennt überwacht werden soll. Mittels solcher Gleitschutzeinrichtungen soll das Blockieren der Radsätze beim Bremsen verhindert und ein optimales Ausnutzen des zur Verfügung stehenden Kraftschlusses zwischen Rad und Schiene erzielt werden. Dadurch können Flachstellen an den Rädern vermieden und die Bremswege verkürzt werden. Dazu werden die Drehgeschwindigkeiten aller Achsen einer Fahrzeugeinheit über Drehzahlgeber erfasst. Hieraus berechnet ein Mikroprozessor des elektronischen Gleitschutzsteuergeräts die tatsächliche Fahrzeug- oder Zuggeschwindigkeit und reduziert den durch die Bremssteuerung vorgegebenen Bremszylinderdruck mittels elektropneumatischer Gleitschutzventile achs- oder drehgestellweise. Solche elektronischen Gleitschutzsteuergeräte sind üblicherweise in jedem Reisezugwagen vorhanden.

Für Fahrzeuge mit einer Höchstgeschwindigkeit von über 200 km/h schreibt die UIC 541-05 neben einer Gleitschutzeinrichtung zusätzlich eine Rollüberwachungseinrichtung vor, welche Drehstörungen von Rädern bzw. das Nichtdrehen von Rädern erfasst und ein entsprechendes Meldesignal aussteuert. Solche Rollüberwachungseinrichtungen umfassen Drehzahlgeber, welche die Drehgeschwindigkeiten der Räder einer Fahrzeugeinheit erfassen und entsprechende Signale ein Rollüberwachungssteuergerät aussteuern.

Weiterhin gewinnen heutzutage im Schienenfahrzeugverkehr Fahrwerksüberwachungseinrichtungen immer mehr an Bedeutung. Aus Sicherheitsgründen werden diese Überwachungssysteme in Richtlinien genormt. Beispiele hierfür sind die folgenden Systeme, die aufgrund der Technischen Spezifikationen für die Interoperabilität (TSI) vom Amtsblatt der Europäischen Gemeinschaft für Hochgeschwindigkeitszüge gefordert werden :
- On-Board-Systeme zur Entgleisungsdetektion,
- On-Board-Systeme zur Heißläuferdetektion bzw. zur Lagerschadenerkennung,
- On-Board-Systeme zur Erkennung von instabilem Lauf bzw. von defekten Dämpfern.

Solche Fahrwerksüberwachungseinrichtungen befinden sich bereits in der Anwendung. So wird z.B. im aktuellen ICE ein System zur Erkennung von instabilem Lauf eingesetzt und in neueren automatisch fahrenden Untergrundbahnen kommt ein System zur Entgleisungsdetektion zur Anwendung. Diesen Systemen ist gemeinsam, dass sie funktional als stand-alone-Systeme aufgebaut sind und für sich alleine wirken.

Die Problematik dieser Fahrwerksüberwachungseinrichtungen als separat aufgebaute Systeme (stand-alone-Lösung) besteht in dem relativ hohen Aufwand und Kosten ihrer Realisierung. Denn der Einbau eines solchen Systems erfordert zusätzliche Baugruppen, Sensoren, Verkabelung und Bauraum. Außerdem wird die Komplexität der technischen Ausrüstung erhöht, was sich negativ auf die Zuverlässigkeit auswirkt.

Die DE 202 20 772 U1 offenbart ein elektronisches Steuergerät mit einem Gehäuse zur Aufnahme von Steckbaugruppen wie beispielsweise Steuerrechner-Baugruppen oder I/O-Baugruppen.

Der Erfindung liegt die Aufgabe zugrunde, eine Steuereinrichtung der eingangs erwähnten Art derart weiter zu bilden, dass die oben genannten Nachteile vermieden werden.

Erfindungsgemäß wird diese Aufgabe durch die Merkmale des Patentanspruchs 1 gelöst.

### Vorteile der Erfindung

Erfindungsgemäß ist die zweite Einrichtung mit der ersten Einrichtung zu einer baulichen Einheit zusammengefasst.

Das Fahrwerksüberwachungssteuergerät benötigt insbesondere die Drehgeschwindigkeitssignale der Radachsen oder der Räder, um die Überwachungsfunktion auszuführen. Diese Signale können mit geringem Aufwand intern weitergeleitet werden, wenn das Fahrwerksüberwachungssteuergerät mit dem Gleitschutzsteuergerät und/oder mit dem Bremssteuergerät und/oder mit dem Rollüberwachungssteuergerät zu einer Baueinheit zusammengefasst bzw. in integrierter Bauweise vorhanden ist. Darüber hinaus stehen diverse Zustandssignale über das aktuelle Brems- und Fahrverhalten den im Überwachungssteuergerät implementierten Überwachungsalgorithmen direkt zur Verfügung und ermöglichen eine effektivere Diagnose.

Die bauliche Einheit nutzt bestimmte Systemkomponenten gemeinsam, nämlich eine gemeinsame Stromversorgung, eine gemeinsame Schnittstelle zur Kommunikation mit einer Bedienperson und eine gemeinsame Schnittstelle zur Kommunikation mit dem Fahrzeugleitsystem. Dies reduziert den gerätetechnischen Aufwand. Bei Anwendung einer leistungsfähigeren Rechnereinheit ist auch das parallele Verarbeiten von Gleitschutz-, Rollüberwachungs- und Fahrwerksüberwachungsalgorithmen denkbar.

Weiterhin kann der Einsatz der Fahrwerksüberwachungseinrichtung zur Diagnose und Früherkennung von schadhaften Bauteilen, kritischen Zuständen bzw. sonstigen Fehlern, wie beispielsweise die Erkennung von Flachstellen an Rädern oder die Früherkennung von Lagerschäden eine frühzeitige und zustandsorientierte Wartung ermöglichen. Ziel sind dabei geringere Stillstandszeiten, eine bessere Ausnutzung von Bauteilen und damit die Einsparung von Kosten.

Nicht zuletzt wertet das Fahrwerksüberwachungssteuergerät das Drehgeschwindigkeitssignal eines Rollüberwachungssensors oder eines Gleitschutzsensors aus. Dabei reduziert die Verwendung von Sensoren, welche die Achs- und/oder Raddrehzahlsignale gleichzeitig an die Fahrwerksüberwachungseinrichtung und/oder an die Gleitschutzeinrichtung und/oder an die Rollüberwachungseinrichtung und/oder an die Bremssteuereinrichtung liefern, den Aufwand für den Sensoreinbau und für die Verkabelung. Aus der Drehzahl der Achsen bzw. Räder kann mit Hilfe der Fahrwerksüberwachungseinrichtung auf mögliche Schäden geschlossen werden.

Durch die in den Unteransprüchen aufgeführten Maßnahmen sind vorteilhafte Weiterbildungen und Verbesserungen der in den unabhängigen Ansprüchen angegebenen Erfindung möglich.

Besonders bevorzugt sind ein Gehäuse des elektronischen Fahrwerksüberwachungssteuergeräts und/oder ein Gehäuse des elektronischen Gleitschutzsteuergeräts und/oder ein Gehäuse des elektronischen Bremssteuergeräts und/oder ein Gehäuse des Rollüberwachungssteuergeräts aneinandergeflanscht. Alternativ kann zumindest ein Teil des elektronischen Fahrwerksüberwachungssteuergeräts und/oder des elektronischen Gleitschutzsteuergeräts und/oder des Rollüberwachungssteuergeräts und/oder des elektronischen Bremssteuergeräts in einem gemeinsamen Gehäuse untergebracht sein.

Der ursprünglich nur der Gleitschutzeinrichtung und/oder der Fahrwrerksüberwachungseinrichtung zugeordnete, zunächst lediglich zur Drehzahlmessung vorgesehene Drehzahlsensor kann beispielsweise zu einem Kombinationssensor ausgebaut sein, welcher außer des Signals für die Rad- oder Achsdrehzahl ein Signal für die Temperatur eines Radsatzlagers und/oder ein Schwingungssignal für am Radsatzlager herrschende Schwingungen aussteuert. Dabei ist der Kombinationssensor vorzugsweise direkt am zu überwachenden Radsatzlager oder in der unmittelbaren Nähe des Radsatzlagers angeordnet.

### Zeichnungen

Ein Ausführungsbeispiel der Erfindung ist in der Zeichnung dargestellt und in der nachfolgenden Beschreibung näher erläutert. In der Zeichnung zeigt:
- Fig.1: eine schematische Darstellung einer Gleitschutzeinrichtung eines Reisezugwagens gemäß einer bevorzugten Ausführungsform;
- Fig.2: eine schematische Querschnittsdarstellung eines in der Gleitschutzeinrichtung verwendeten Kombinationssensors von Fig.1;

### Beschreibung des Ausführungsbeispiels

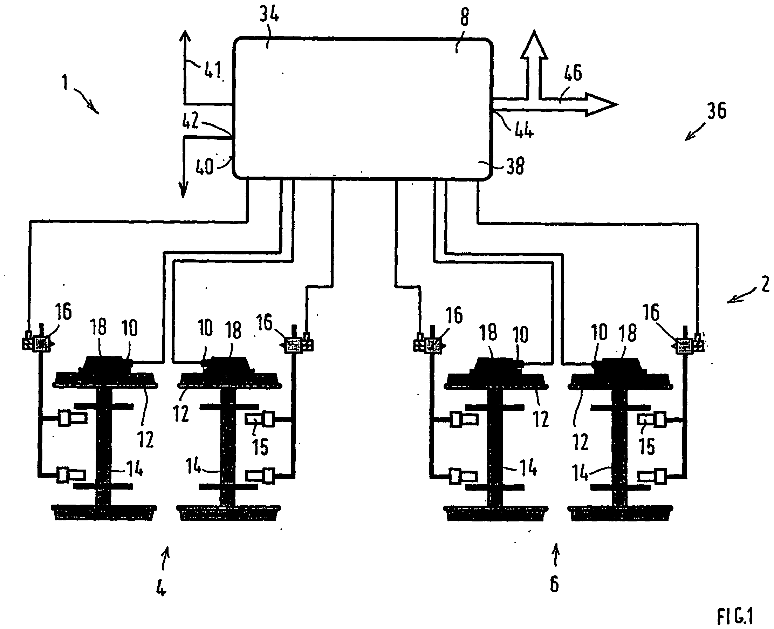

In Fig.1 ist schematisch der Aufbau einer Gleitschutzeinrichtung 1 eines Reisezugwagens 2 mit zwei zweiachsigen Drehgestellen 4, 6 dargestellt, welcher beispielsweise für eine Geschwindigkeit bis zu 200 km/h ausgelegt ist.

Die Gleitschutzeinrichtung 1 verfügt über ein elektronisches Gleitschutzsteuergerät 8 sowie über Sensoren 10 an beispielsweise jedem Rad 12 einer Achse 14 eines Drehgestells 4, 6, durch welche die momentane Drehgeschwindigkeit der jeweiligen Achse bzw. des jeweiligen Rades detektierbar ist. In Fig.1 ist aus Übersichtlichkeitsgründen jedoch nur an jeweils einer Achsseite ein solcher Sensor 10 dargestellt. In bekannter Weise berechnet ein Mikroprozessor des elektronischen Gleitschutzsteuergeräts 8 die tatsächliche Fahrzeug- oder Zuggeschwindigkeit und reduziert den durch die in einem nicht dargestellten Führerfahrzeug angeordnete Bremssteuereinrichtung vorgegebenen Bremszylinderdruck im Bremszylinder 15 mittels elektropneumatischer Gleitschutzventile 16 achsweise. Die Achsen 14 sind über jeweils zwei radnahe Radsatzlager 18 am jeweiligen Drehgestell 4, 6 drehbar gehalten, wobei von den Radsatzlagern 18 in Fig.1 jedoch nur jeweils eines je Achse 14 gezeichnet ist.

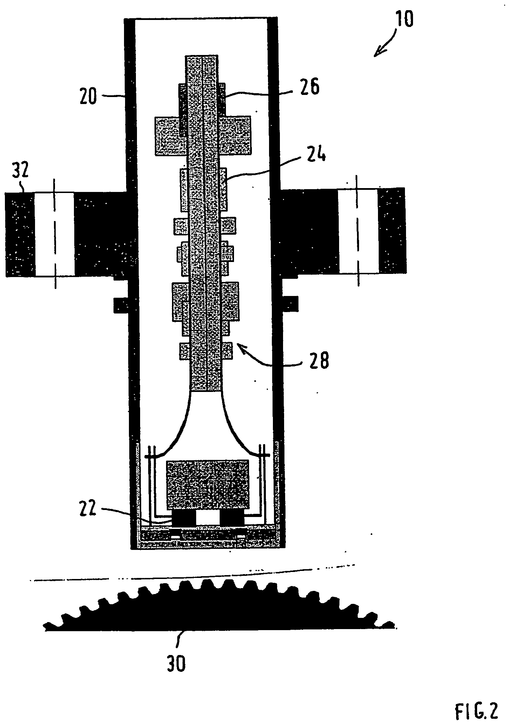

Je einem Radsatzlager 18 einer Achse 14 ist ein in Fig.2 explizit dargestellter Kombinationssensor 10 zugeordnet, mit welchem die momentane Drehgeschwindigkeit der zugeordneten Achse 14 bzw. des zugeordneten Rades 12, die momentane Temperatur des betreffenden Radsatzlagers 18 sowie wenigstens eine Längsbeschleunigung des betreffenden Radsatzlagers 18 messbar ist.

Gemäß einer besonders bevorzugten Ausführungsform sind in einem sich quer zur Radachse erstreckenden Gehäuse 20 des Kombinationssensors 10 ein Hallsensor 22, ein Temperatursensor 24, ein Beschleunigungssensor 26 sowie eine Auswerteelektronik 28 zur Bildung und Aussteuerung eines Drehgeschwindigkeits-, eines Temperatur- und wenigstens eines Beschleunigungssignals. Dem Hallsensor 22 liegt ein mit der jeweiligen Achse 14 bzw. mit dem jeweiligen Rad 12 mitdrehendes Polrad 30 gegenüber, durch dessen Drehung ein Signal für die momentane Drehgeschwindigkeitssignal der jeweiligen Achse 14 bzw. des jeweiligen Rades 12 erzeugt wird. Das Gehäuse 20 weist vorzugsweise einen Außenflansch 32 auf, über welchen der Kombinationssensor 10 unmittelbar an dem betreffenden Radsatzlager 18 lösbar befestigt werden kann. Dadurch wird der auf das Radsatzlager 18 einwirkende Körperschall, welcher beispielsweise von Abflachungen an einem Rad 12 der Achse 14 oder einem defekten Radsatzlager 18 herrührt, auf das Gehäuse 20 des Kombinationssensors 10 übertragen und kann dann vom Beschleunigungssensor 26 detektiert werden. Dieser ist vorzugsweise zur Messungen von Längsschwingungen in allen drei Raumachsen ausgebildet, es sind aber auch weniger Messrichtungen darstellbar. Auf demselben Wege wird die in dem betreffenden Radsatzlager 18 herrschende Temperatur auf den Temperatursensor 24 übertragen.

Diese Signale werden von der Auswerteelektronik 28 unter anderem an ein Fahrwerksüberwachungssteuergerät 34 einer Fahrwerksüberwachungseinrichtung 36 ausgesteuert, welches folgende Überwachungsfunktionen ausführen kann :
- Warm- und Heißläuferdetektion des jeweiligen Radsatzlagers 18 durch Temperaturüberwachung des Radsatzlagers 18;
- Lagerschadenerkennung des jeweiligen Radsatzlagers 18 durch entsprechende Schwingungssignale;
- Erkennung von instabilem Lauf bzw. von defekten Dämpfern im Fahrwerk durch entsprechende Schwingungssignale;
- Entgleisungsdetektion;
- Detektion von Flachstellen und unrunden Rädern 12 durch entsprechende Schwingungssignale.

Die Funktionen Entgleisungsdetektion, Heißläufererkennung sowie Detektion von instabilem Laufverhalten sind Forderungen bzw. Empfehlungen der TSI für Hochgeschwindigkeitszüge. Die Temperatur-, Drehgeschwindigkeits- und Beschleunigungssignale der Kombinationssensoren 10 können zusätzlich als Diagnosedaten zur frühzeitigen Erkennung defekter Bauteile oder Streckenabschnitte der Schienen herangezogen werden.

Das Fahrwerksüberwachungssteuergerät 34 ist mit dem Gleitschutzsteuergerät 8 in einer Baueinheit 38 zusammengefasst. Dies kann beispielsweise dadurch realisiert sein, dass ein Gehäuse des elektronischen Fahrwerksüberwachungssteuergeräts 34 und ein Gehäuse des elektronischen Gleitschutzsteuergeräts 8 aneinandergeflanscht sind. Bevorzugt sind jedoch das elektronische Fahrwerksüberwachungssteuergerät 34 und das elektronische Gleitschutzsteuergerät 8 in einem gemeinsamen Gehäuse 40 untergebracht.

Die Fahrwerksüberwachungseinrichtung 36 und die Gleitschutzeinrichtung 1 können wenigstens eine gemeinsame Stromversorgung 41, eine gemeinsame Schnittstelle 42 zur Kommunikation mit einer Bedienperson und eine gemeinsame Schnittstelle 44 zur Kommunikation mit einem Fahrzeugleitsystem aufweisen. Die gemeinsame Schnittstelle 44 zur Kommunikation mit dem Fahrzeugleitsystem ist insbesondere an einen Fahrzeugbus 46 angeschlossen, um beispielsweise kritische Zustände, welche die Fahrwerksüberwachungseinrichtung 36 detektiert hat, an eine Anzeigeeinrichtung zu melden.

Falls das betreffende Schienenfahrzeug kein Reisezugwagen 2, sondern das Führerfahrzeug des Schienenfahrzeugverbandes ist, ist in diesem ein zentrales elektronisches Bremssteuergerät der Bremssteuereinrichtung vorhanden, welches die Bremsvorgänge des gesamten Schienenfahrzeugverbandes steuert und regelt.

Falls ein Reisezugwagen oder ein Führerfahrzeug für Geschwindigkeiten über 200 km/h ausgelegt ist, ist neben der Gleitschutzeinrichtung 1 zusätzlich eine Rollüberwachungseinrichtung mit einem elektronischen Rollüberwachungsteuergerät vorhanden, welches die Drehzahlsignale des Kombinationssensors 10 empfängt und daraus ermittelt, ob Roll- oder Drehstörungen der Räder des Schienenfahrzeugs vorliegen.

Je nach Ausstattung und Art des Schienenfahrzeugs soll dann das elektronische Fahrwerksüberwachungssteuergerät mit dem elektronischen Gleitschutzsteuergerät und/oder mit dem elektronischen Bremssteuergerät und/oder mit dem Rollüberwachungssteuergerät zu einer baulichen Einheit zusammengefasst sein.

### Bezugszahlenliste

- 1: Gleitschutzeinrichtung
- 2: Reisezugwagen
- 4: Drehgestell
- 6: Drehgestell
- 8: Gleitschutzsteuergerät
- 10: Kombinationssensor
- 12: Rad
- 14: Achse
- 15: Bremszylinder
- 16: Gleitschutzventil
- 18: Radsatzlager
- 20: Gehäuse
- 22: Hallsensor
- 24: Temperatursensor
- 26: Beschleunigungssensor
- 28: Auswerteelektronik
- 30: Polrad
- 32: Außenflansch
- 34: Fahrwerksüberwachungssteuergerät
- 36: Fahrwerksüberwachungseinrichtung
- 38: Baueinheit
- 40: Gehäuse
- 41: Stromversorgung
- 42: Schnittstelle
- 44: Schnittstelle
- 46: Fahrzeugbus

## Patentansprüche

1. Steuereinrichtung eines Schienenfahrzeugs (2), die eine erste Einrichtung aufweist, wobei die erste Einrichtung
- eine Bremssteuereinrichtung ist, und ein elektronisches Bremssteuergerät zur Ausgabe von Steuerbefehlen an Bremsaktuatoren umfasst
und/oder
- eine Gleitschutzeinrichtung (1) ist, welche in Abhängigkeit wenigstens eines von einem Gleitschutzsensor (10) an ein elektronisches Gleitschutzsteuergerät (8) gelieferten Drehgeschwindigkeitssignals den Radschlupf der Räder (12) wenigstens einer Achse regelt
und/oder
- eine Rollüberwachungseinrichtung ist, und ein elektronisches Rollüberwachungssteuergerät und wenigstens einen Rollüberwachungssensor zum Erfassen der Drehgeschwindigkeit wenigstens einiger Räder in Form eines Drehgeschwindigkeitssignals umfasst,
wobei die Steuereinrichtung eine zweite Einrichtung aufweist, die eine Fahrwerksüberwachungseinrichtung (36) zur Überwachung und/oder zur Diagnose des Fahrwerks im Hinblick auf kritische Zustände und Schäden, Entgleisung,
heissgelaufene Lager, instabiler Lauf und ähnliches ist, und ein elektronisches Fahrwerksüberwachungssteuergerät (34) umfasst,
**dadurch gekennzeichnet, dass**
die zweite Einrichtung mit der ersten Einrichtung zu einer baulichen Einheit zusammengefasst ist, wobei das Fahrwerksüberwachungssteuergerät (34) das Drehgeschwindigkeitssignal eines Rollüberwachungssensors oder eines Gleitschutzsensors (10) auswertet und die zweite Einrichtung mit der ersten Einrichtung wenigstens eine gemeinsame Stromversorgung (41) und eine gemeinsame Schnittstelle (42) zur Kommunikation mit einer Bedienperson und eine gemeinsame Schnittstelle (44) zur Kommunikation mit einem Fahrzeugleitsystem aufweist.

2. Steuereinrichtung nach Anspruch 1, **dadurch gekennzeichnet, dass** ein Gehäuse des elektronischen Fahrwerksüberwachungssteuergeräts und/oder ein Gehäuse des elektronischen Gleitschutzsteuergeräts und/oder ein Gehäuse des elektronischen Bremssteuergeräts und/oder ein Gehäuse des Rollüberwachungssteuergeräts aneinandergeflanscht sind.

3. Steuereinrichtung nach Anspruch 1, **dadurch gekennzeichnet, dass** zumindest ein Teil des elektronischen Fahrwerksüberwachungssteuergeräts (34) und/oder des elektronischen Gleitschutzsteuergeräts (8) und/oder des elektronischen Bremssteuergeräts und/oder des Rollüberwachungssteuergeräts in einem gemeinsamen Gehäuse (40) untergebracht sind.

4. Steuereinrichtung nach einem der vorhergehenden Ansprüche, **dadurch gekennzeichnet, dass** die gemeinsame Schnittstelle (44) zur Kommunikation mit einem Fahrzeugleitsystem an einen Fahrzeugbus (46) angeschlossen ist.

5. Steuereinrichtung nach Anspruch 4, **dadurch gekennzeichnet, dass** das Fahrzeugleitsystem eine Anzeigeeinrichtung zur Meldung von kritischen Zuständen aufweist, welche die Fahrwerksüberwachungseinrichtung (38) detektiert hat, aufweist.

6. Steuereinrichtung nach wenigstens einem der vorhergehenden Ansprüche, **dadurch gekennzeichnet, dass** der Rollüberwachungssensor und/oder der Gleitschutzsensor ein Kombinationssensor (10) ist, welcher außer dem Signal für die Drehgeschwindigkeit wenigstens eines Rades oder einer Achse ein Signal für die Temperatur eines Radsatzlagers (18) und/oder ein Schwingungssignal für am Radsatzlager (18) herrschende Schwingungen aussteuert.

7. Steuereinrichtung nach Anspruch 6, **dadurch gekennzeichnet, dass** der Kombinationssensor (10) direkt am Radsatzlager (18) oder in unmittelbarer Nähe des Radsatzlagers (18) angeordnet ist.

8. Schienenfahrzeug, beinhaltend eine Steuereinrichtung nach wenigstens einem der vorhergehenden Ansprüche.

## Claims

1. Control device of a rail vehicle (2) having a first device, wherein the first device
- is a brake control device and comprises an electronic brake control unit for outputting control commands to brake actuators,
and/or
- is an anti-skid device (1) which controls the wheel slip of the wheels (12) of at least one axle as a function of at least one rotational speed signal supplied to an electronic anti-skid control unit (8) by an anti-skid sensor (10),
and/or
- is a roll monitoring device and comprises an electronic roll monitoring control unit and at least one roll monitoring sensor for sensing the rotational speed of at least a number of wheels in the form of a rotational speed signal,
wherein the control device comprises a second device which comprises a rolling gear monitoring device (36) for monitoring and/or for diagnosing the rolling gear with respect to critical states and damage such as derailment, overheated bearings, unstable running and the like, and which further comprises an electronic rolling gear monitoring control unit (34),
**characterised in that**
the second device is combined with the first device to form a structural unit, wherein the rolling gear monitoring control unit (34) evaluates the rotational speed signal of a roll monitoring sensor and/or of an anti-skid sensor (10), and wherein the second device and the first device have at least one common power supply (41) and a common interface (42) for communicating with an operator and a common interface (44) for communicating with a vehicle control system.

2. Control device according to claim 1, **characterised in that** a housing of the electronic rolling gear monitoring control unit and/or a housing of the electronic anti-skid control unit and/or a housing of the electronic brake control device and/or a housing of the roll monitoring control unit are connected to one another by flanges.

3. Control device according to claim 1, **characterised in that** at least parts of the electronic rolling gear monitoring control unit (34) and/or of the electronic anti-skid control unit (8) and/or of the electronic brake control unit and/or of the roll monitoring control unit are accommodated in a common housing (40).

4. Control device according to any of the preceding claims, **characterised in that** the common interface (44) for communicating with a vehicle control system is connected to a vehicle bus (46).

5. Control device according to claim 4, **characterised in that** the vehicle control system has a display device for signalling critical states which the rolling gear monitoring device (38) has detected.

6. Control device according to one or more of the preceding claims, **characterised in that** roll monitoring sensor and/or the anti-skid sensor is/are a combination sensor (10) which, apart from the signal for the rotational speed of at least one wheel or an axle, modulates a signal for the temperature of a wheel set bearing (18) and/or an oscillation signal for oscillations occurring at the wheel set bearing (18).

7. Control device according to claim 6, **characterised in that** the combination sensor (10) is arranged directly on the wheel set bearing (18) or in the direct vicinity of the wheel set bearing (18).

8. Rail vehicle comprising a control device according to one or more of the preceding claims.

## Revendications

1. Dispositif de commande d'un véhicule (2) ferroviaire, qui comporte un premier dispositif, dans lequel le premier dispositif est
- un dispositif de commande de frein et comprend un appareil électronique de commande de frein pour l'émission d'instructions de commande à des actionneurs de frein,
et/ou
- un dispositif (1) anti-enrayeur, qui règle le patinage des roues (12) d'au moins un essieu en fonction d'au moins un signal de vitesse de rotation, fourni par un capteur (10) d'anti-enrayage à un appareil (8) électronique de commande d'anti-enrayage,
et/ou
- un dispositif de contrôle du roulis, et comprend un appareil électronique de contrôle de roulis et au moins un capteur de contrôle de roulis, pour détecter la vitesse de rotation d'au moins une roue sous la forme d'un signal de vitesse de rotation,
dans lequel le dispositif de commande comporte un deuxième dispositif, qui comprend un dispositif (36) de contrôle du châssis pour le contrôle et/ou le diagnostic en ce qui concerne des états critiques et des endommagements, un déraillement, un échauffement de palier, une instabilité de marche et analogues, et un appareil (34) électronique de commande de contrôle de châssis,
**caractérisé en ce que**
le deuxième dispositif est rassemblé avec le premier dispositif en une unité de construction, l'appareil (34) de commande de contrôle de châssis exploitant le signal de vitesse de rotation d'un capteur de contrôle de roulis ou d'un capteur (10) d'anti-enrayage, et le deuxième dispositif ayant avec le premier dispositif au moins une alimentation (41) commune en courant et une interface (42) commune de communication avec un opérateur et une interface (44) commune de communication avec un système de conduite de véhicule.

2. Dispositif de commande suivant la revendication 1, **caractérisé en ce qu'**un boîtier de l'appareil électronique de commande de contrôle de châssis et/ou un boîtier de l'appareil électronique de commande d'anti-enrayage et/ou un boîtier de l'appareil électronique de commande de frein et/ou un boîtier de l'appareil de commande de contrôle de roulis sont bridés les uns aux autres.

3. Dispositif de commande suivant la revendication 1, **caractérisé en ce qu'**au moins une partie de l'appareil (34) électronique de commande de contrôle de châssis et/ou de l'appareil (8) électronique de commande d'anti-enrayage et/ou de l'appareil électronique de commande de frein et/ou de l'appareil de commande de contrôle de roulis sont logées dans un boîtier (40) commun.

4. Dispositif de commande suivant l'une des revendications précédentes, **caractérisé en ce que** l'interface (44) commune de communication avec un système de conduite de véhicule est raccordée à un bus (46) de véhicule.

5. Dispositif de commande suivant la revendication 4, **caractérisé en ce que** le système de conduite de véhicule comporte un dispositif indicateur pour avertir d'états critiques, que le dispositif (38) de contrôle de châssis a détectés.

6. Dispositif de commande suivant au moins l'une des revendications précédentes, **caractérisé en ce que** le capteur de contrôle de roulis et/ou le capteur d'anti-enrayage est un capteur (10) combiné, qui, outre le signal pour la vitesse de rotation d'au moins une roue ou un essieu, émet un signal de la température d'un palier (18) d'une paire de roues et/ou un signal d'oscillations pour des oscillations apparaissant au palier (18) de la paire de roues.

7. Dispositif de commande suivant la revendication 6, **caractérisé en ce que** le capteur (10) combiné est placé directement sur le palier (18) de la paire de roues ou à proximité immédiate du palier (18) de la paire de roues.

8. Véhicule ferroviaire composant un dispositif de commande suivant au moins l'une des revendications précédentes.
